# FASCICULE DE BREVET EUROPEEN

(11) **EP 1 505 890 B1**
(45) Date de publication et mention de la délivrance du brevet: **07.06.2006**
(21) Numéro de dépôt: 02772288.3
(22) Date de dépôt: 11.09.2002
(51) Int. Cl.: A45C 9/00, G06F 1/16

(54) **MALLETTE DE RECEPTION POUR UN ENSEMBLE VIDEO COMPRENANT UNE CONSOLE ELECTRONIQUE, GENRE LECTEUR VIDEO OU CONSOLE DE JEUX, ET L'ECRAN INDEPENDANT ASSOCIE**
KOFFER ZUR AUFNAHME EINES VIDEOGERÄTES, MIT EINER ELEKTRONISCHEN KONSOLE, WIE Z.B. VIDEOSPIELER ODER SPIELKONSOLE, UND EINER UNABHÄNGIGEN ANZEIGEVORRICHTUNG
HOUSING CASE FOR VIDEO SET COMPRISING A VIDEO PLAYER OR GAME CONSOLE TYPE ELECTRONIC CONSOLE, AND ASSOCIATED INDEPENDENT DISPLAY

(30) Priorité: 17.05.2002 FR 0206103
(43) Date de publication de la demande: 16.02.2005
(73) Titulaire: Security Vision Concept, 1143 Luxembourg (LU)
(72) Inventeur: JOST, Gilbert, L-4970 Bettange/Mess (LU); ALBERT, Pascal, L-8077 Bertrange (LU)
(74) Mandataire: Dennemeyer, John James
(86) Numéro de dépôt international: PCT/EP2002/010189
(87) Numéro de publication internationale: WO 2003/096836

(56) Documents cités:
- DE-U- 8 525 901
- DE-U- 9 212 801
- GB-A- 2 312 160
- US-A- 6 145 661
- US-B1- 6 283 299

## Description

La présente invention concerne une mallette de réception pour un ensemble vidéo constitué d'une console électronique, telle qu'un lecteur DVD, SVCD, VCD, ou console de jeux ou autre _, et d'un écran indépendant associé (écran à cristaux liquides, cathodique, à plasma_); elle concerne également l'installation vidéo complète constituée de cette mallette ou sacoche, de la console électronique et de l'écran associé.

Des exemples de telles mallettes de réception pour un ensemble vidéo sont décrits dans les documents DE-U-85 25 901 et DE-U-92 12 801.

Ce document DE-U-85 25 901 décrit une mallette de réception pour un ensemble vidéo selon le préambule de la revendication 1. Cette mallette de réception pour console électronique et écran vidéo est constituée de deux parties de rangement solidarisées entre elles par l'intermédiaire d'un système de charnière, et munies de moyens qui permettent leur verrouillage amovible en position fermée, c'est-à-dire lorsqu'elles sont en contact l'une avec l'autre par leur bordure périphérique; l'une desdites parties de rangement solidarisées entre elles par l'intermédiaire d'un système de charnière, et munies de moyens qui permettent leur verrouillage amovible en position fermée, c'est-à-dire lorsqu'elles sont en contact l'une avec l'autre par leur bordure périphérique; l'une desdites parties de rangement est adaptée pour réceptionner l'écran vidéo de manière amovible, avec sa face frontale visible lorsque la mallette est en position ouverte, et l'autre desdites parties de rangement est adaptée pour réceptionner la console électronique associée, également de manière amovible. Cette mallette comporte en outre - au moins une prise de connexion d'alimentation, aménagée sur l'une desdites parties de rangement, à partir de laquelle s'étend un câblage interne d'alimentation aboutissant à deux fiches amovibles de connexion sur l'écran et sur la console électronique, ainsi - qu'un système de câblage interne muni de fiches amovibles pour la liaison audio-vidéo entre ladite console électronique et ledit écran.

Les structures de mallettes ou de sacoches connues jusqu'à présent ne sont pas vraiment adaptées pour la réception d'un ensemble vidéo et type DVD par exemple, ou autre _, comprenant un premier boîtier en forme de console électronique constituant le lecteur, et un second boîtier constituant l'écran associé; et ces structures sont encore moins adaptées pour la mise en oeuvre de cet ensemble vidéo intégré, c'est-à-dire pour l'utilisation de la console et la visualisation vidéo sur l'écran réceptionné.

La présente invention a pour but de remédier aux inconvénients mentionnés ci-dessus et de proposer une structure de réception originale en forme de mallette ou de sacoche spécialement adaptée pour recevoir une console électronique et son écran, en vue non seulement du rangement et du transport de cet ensemble, mais permettant également l'utilisation de cette console avec son écran, de manière efficace et pratique.

Ces buts ainsi que d'autres sont atteints, suivant l'invention par une nouvelle mallette de réception pour un ensemble vidéo ayant les caractéristiques de la partie caractérisante de la revendication 1.

Selon l'invention, la partie de rangement de la console électronique comporte un logement de réception muni d'une face de dessus amovible ou partiellement amovible, notamment pour rendre possible l'utilisation de ladite console une fois intégrée dans son logement.
Cette face de dessus est réalisée en matériau souple et comporte au moins une partie transparente pour rendre accessibles et actionnables les organes fonctionnels de la console électronique.

Selon une forme de réalisation particulière, la mallette comporte un compartiment particulier pour les systèmes de câblage d'alimentation et de liaison console/écran. Ce compartiment est aménagé dans la partie de rangement de la console électronique, du côté du système de charnière, derrière le logement de ladite console, et il est muni d'ouvertures ou d'orifices internes qui permettent le passage desdits systèmes de câblage.

Selon une autre caractéristique, la partie de rangement de l'écran comporte un réceptacle d'encastrement pour ledit écran, muni d'organes de verrouillage amovibles. Ce réceptacle est de préférence fixé sur un bloc de matière protectrice (par exemple une mousse), et ce bloc de madère est lui-même fixé sur l'enveloppe de la partie de rangement correspondante.

Selon encore une autre particularité, la mallette conforme à la présente invention comporte des organes qui permettent de limiter l'angle d'ouverture des deux parties de rangement

Selon un mode de réalisation particulier, la mallette comporte une prise complémentaire de connexion d'alimentation, ainsi que des prises de connexion audio-vidéo, qui sont reliées aux systèmes de câblage internes. Cette particularité permet l'alimentation de l'écran extrait de la mallette, ou d'un second écran indépendant.

L'invention concerne également l'installation vidéo constituée d'une mallette telle que définie ci-dessus, dans l'une des parties de rangement de laquelle est positionné l'écran, et dans l'autre partie de rangement de laquelle est insérée la console électronique, ladite mallette intégrant également - au moins un cordon d'alimentation pour la liaison de la prise de connexion d'alimentation, notamment au secteur ou à la prise allume-cigares d'un véhicule automobile, ou autre..., ainsi qu'éventuellement - différents accessoires tels qu'une télécommande ou un casque audio par exemple.

Selon un mode de réalisation particulièrement intéressant, dans la mallette de cette installation vidéo, le réceptacle d'encastrement amovible de l'écran est muni d'organes de verrouillage coopérant avec des organes complémentaires de verrouillage aménagés sur ledit écran.

Dans une forme de réalisation particulière, la mallette comporte deux prises de connexion d'alimentation et des prises de connexion pour la liaison audio-vidéo, aménagées sur son enveloppe extérieure, et elle intègre un second écran indépendant; avec un système de câblage approprié adapté pour l'alimentation et la liaison audio-vidéo de ce second écran.

Mais l'invention sera encore illustrée par la description suivante de deux modes de réalisation particuliers, donnés uniquement à titre d'exemple et représentés sur les dessins annexés dans lesquels :
- la figure 1 est une vue en perspective d'une mallette ou sacoche conforme à la présente invention, illustrée ici en position fermée ;
- la figure 2 est une vue par dessous de la mallette illustrée sur la figure 1 ;
- la figure 3 est une vue en perspective de la mallette des figures 1 et 2, illustrée en position ouverte et équipée d'un lecteur DVD, ainsi que de l'écran associé (représentés extraits de la mallette) ;
- la figure 4 est une vue schématique, en coupe selon 4-4 de la figure 3 sur la partie de rangement de l'écran DVD, les différentes parties étant représentées éclatées ;
- la figure 5 est une vue de détail du principe de fixation du réceptacle d'encastrement de l'écran sur le bloc de mousse protectrice, conformément à la représentation de la figure 4 ;
- la figure 6 est une vue schématique, toujours en coupe, qui illustre une autre manière de fixer le réceptacle d'écran sur le bloc de mousse, les différentes parties étant encore représentées éclatées ;
- la figure 7 est une vue schématique des systèmes de câblage d'alimentation et de liaison lecteur/écran intégrés dans la mallette ;
- la figure 8 est une vue en perspective d'un réceptacle d'encastrement d'écran fixé sur une housse d'appui-tête, formant un accessoire complémentaire susceptible d'être inséré dans la mallette conforme à la présente invention ;
- la figure 9 est une vue en perspective d'une autre forme de réalisation possible d'une mallette conforme à la présente invention ;
- la figure 10 est une vue schématique des systèmes de câblage d'alimentation et de liaison lecteur/écran de la mallette illustrée sur la figure 9.

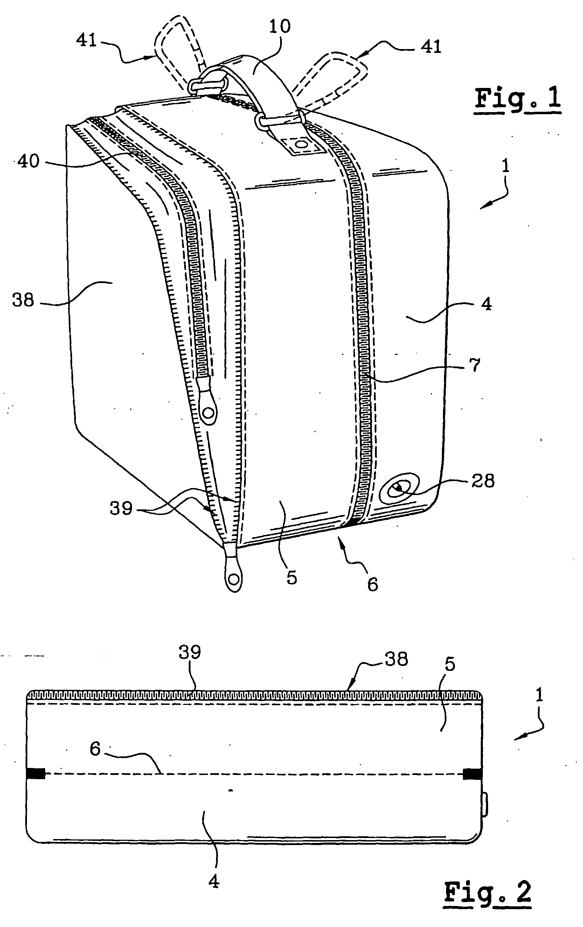

La mallette ou sacoche 1 illustrée sur les figures 1 à 7 permet le rangement d'une console électronique 2 et d'un écran 3, qui se présentent ici sous la forme d'un lecteur et d'un écran DVD ; elle intègre également un précâblage interne destiné à la liaison électrique entre le lecteur 2 et l'écran 3, en vue du visionnage de disques vidéo DVD.

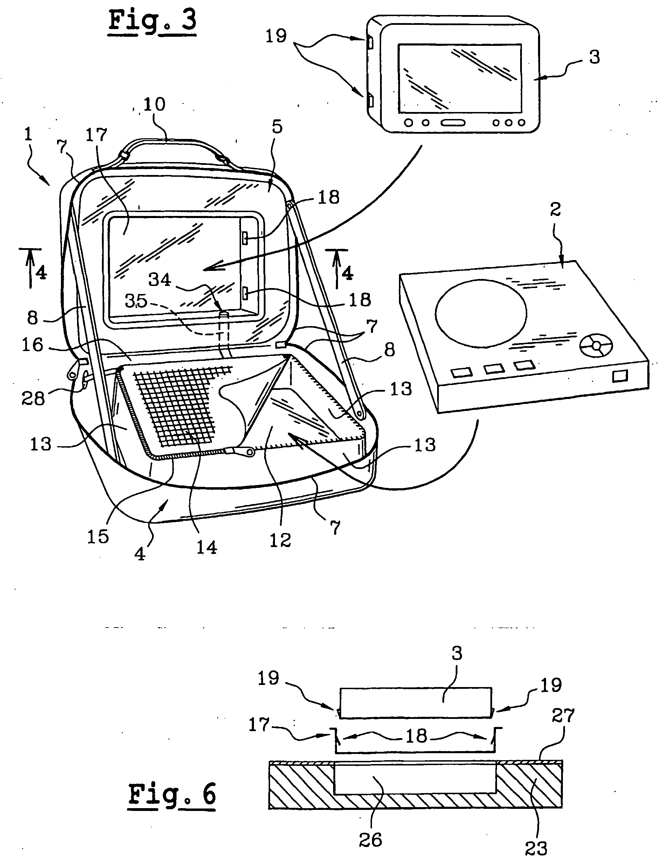

Cette mallette ou sacoche 1 comprend deux parties de rangement 4 et 5 de forme générale parallélépipédique, reliées par un système de charnière 6 au niveau de la zone de fond, et munies d'un système de fermeture à glissière 7 sur les trois autres côtés de leur bordure périphérique, c'est-à-dire sur les côtés latéraux et sur la partie avant.
La fermeture à glissière 7 permet un verrouillage amovible des deux parties de rangement 4 et 5 en position fermée (figures 1 et 2), c'est-à-dire lorsque lesdites parties de rangement 4 et 5 sont en contact l'une avec l'autre par leur bordure périphérique. Lorsque la mallette est ouverte, l'angle d'ouverture de ces deux parties de rangement 4, 5 est limité par la présence de deux languettes souples latérales 8, visibles sur la figure 3 ; ces deux languettes souples 8 peuvent être réglables en longueur et elles peuvent être fixées sur les parties de rangement 4 et 5 de manière amovible, par exemple par l'intermédiaire de systèmes à boutons-pressions.

L'enveloppe externe des deux parties de rangement 4 et 5 peut être réalisée en matériau souple, genre tissu, matière plastique ou cuir par exemple, associé à une, épaisseur de mousse ou autre matière permettant d'absorber les chocs.
Dans un mode de réalisation dérivé, cette enveloppe peut prendre la forme de coques rigides solidarisées par un système de charnière, et munies d'un ou de plusieurs clips de fermeture sur le côté opposé à ladite charnière.

Sur les figures 1 et 3, on remarque que la mallette est équipée d'une poignée de préhension 10 aménagée sur la partie avant, c'est-à-dire sur le côté opposé à la charnière 6. Dans l'exemple de réalisation illustré, la poignée 10 est fixée sur la partie de rangement 5 qui a une épaisseur un peu supérieure à celle de la partie de rangement 4.

La face intérieure de la partie de rangement 4 est aménagée pour réceptionner la console 2 en forme de lecteur DVD.
Cette partie de rangement 4 intègre à cet effet un logement 12 qui occupe une grande partie du volume disponible, et qui est délimité par une ceinture de parois latérales 13 et par une face de dessus 14.
Les parois latérales 13 sont réalisées en matériau souple, par exemple en tissu ou en matière synthétique ; elles peuvent être solidarisées avec l'enveloppe de la partie de rangement 4 au moyen de coutures ou par collage. Certaines au moins de ces parois latérales 13 sont de préférence disposées un peu en retrait par rapport aux côtés de l'enveloppe de la partie de rangement 4 de manière à protéger efficacement la console électronique 2.

La face de dessus 14 est solidaire de la bordure supérieure des parois latérales 13. Sur la partie avant et les côtés latéraux, cette solidarisation est réalisée par l'intermédiaire d'une fermeture à glissière 15 pour permettre l'intégration du lecteur DVD 2 dans le logement 12, et son extraction.
Cette face de dessus 14 est également réalisée en matériau souple genre tissu ou matière synthétique ; de préférence elle comporte une partie transparente (matière plastique ou structure ajourée), ou elle est réalisée intégralement en matière transparente, pour permettre l'actionnement des boutons tactiles fonctionnels de la console 2 lorsque ladite console est placée dans son logement 12.

Comme on l'a vu précédemment, un espace plus ou moins important est préservé entre les côtés de la partie de rangement 4 et la ceinture de parois 13 ; cet espace définit notamment un compartiment particulier 16 dans le fond de la mallette, côté charnière 6, dont la fonction sera explicitée plus loin.

La face interne de la partie de rangement 5 est aménagée pour réceptionner l'écran DVD 3, en particulier de telle sorte que la face frontale de cet écran soit visible lorsque la mallette est en position ouverte (figure 3).
Pour cela, et dans l'exemple de réalisation illustré, la partie de rangement 5 comporte un réceptacle 17, en forme de boîtier, qui est adapté pour assurer un maintien efficace de l'écran 3 par encastrement amovible. Les dimensions du réceptacle 17 sont adaptées à celles de l'écran 3 ; et ce réceptacle 17, ainsi que l'écran 3 comportent des organes complémentaires d'encliquetage 18, 19 permettant le verrouillage amovible dudit écran 3 une fois encastré dans ledit réceptacle 17.
Les organes d'encliquetage 18, 19 sont aménagés sur les côtés de chaque élément ; l'extraction de l'écran 3 hors du réceptacle 17 peut s'effectuer en désactivant ces organes d'encliquetage, par exemple au moyen de cartes très fines insérées entre les deux éléments.

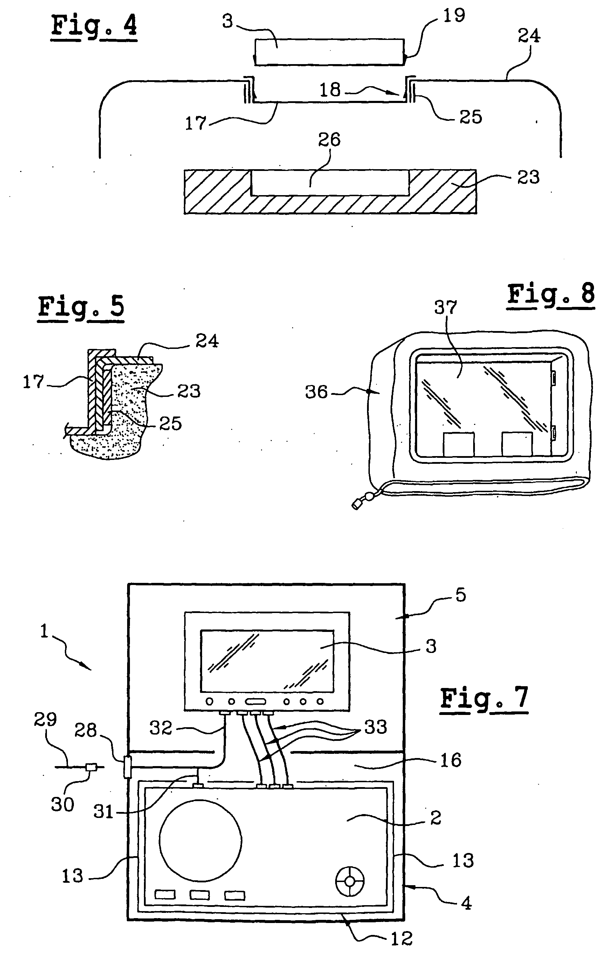

Le réceptacle d'encastrement 17 est avantageusement fixé dans la partie de rangement 5 sur un bloc de matière protectrice 23 (par exemple un bloc de mousse), et ceci par l'intermédiaire d'une coiffe de recouvrement 24, de la manière illustrée sur les figures 4 et 5.

Comme on peut le voir sur ces deux figures, le réceptacle 17 est fixé sur le pourtour d'une ouverture aménagée dans la coiffe 24 par l'intermédiaire d'un collier de serrage ou d'un cerclage 25. On peut aussi envisager de réaliser cette fixation par simple collage.
Le réceptacle 17 ainsi équipé vient se loger dans une réservation 26 de forme générale parallélépipédique adaptée, aménagée dans le bloc de mousse 23, et la coiffe de recouvrement 24 est fixée sur les côtés et/ou sur la face de dessus de ce bloc de mousse, par exemple par collage, pour obtenir une finition esthétique. La matière de la coiffe de recouvrement 24 (cuir, tissu, matière synthétique ou autre) est choisie notamment en fonction de l'aspect de finition désiré.

Le bloc de mousse 23 équipé du réceptacle d'encastrement 17 et de la coiffe de recouvrement 24 est fixé par tout moyen approprié à l'intérieur de l'enveloppe de la partie de rangement 5, notamment par collage.

Comme on l'a illustré sur la figure 6, dans une variante de réalisation, la face de dessus du bloc de mousse 23 peut recevoir un revêtement de finition 27, fixé par exemple par collage ; et le boîtier 17 de réception de l'écran 3 peut être simplement fixé par collage ou intégré à force dans la réservation 26 du bloc de mousse 23.

Les connexions électriques permettant le fonctionnement de l'ensemble vidéo (lecteur + écran DVD) intégré dans la mallette 1 sont détaillées sur la figure 7.
Sur cette figure, on remarque la présence d'une prise de connexion d'alimentation 28 fixée sur l'enveloppe externe de la mallette, et en particulier pour le mode de réalisation illustré, fixé sur la partie de rangement 4, en regard du compartiment 16. Cette prise de connexion d'alimentation 28, également visible sur la figure 1, permet le branchement de l'installation sur le secteur ou sur la prise allume-cigares d'un véhicule automobile, au moyen d'un cordon de connexion 29 muni d'une fiche amovible adaptée 30.

Les câbles intégrés 31 et 32 qui assurent l'alimentation respectivement du lecteur DVD 2 et de l'écran DVD 3 s'étendent depuis la prise de connexion 28. Ces deux câbles 31 et 32 sont munis à leur extrémité libre d'une fiche amovible de connexion dont le type est adapté à l'appareil connecté.
D'autre part, le lecteur 2 et l'écran 3 sont reliés par différents câbles 33 destinés à assurer la liaison audio-vidéo (notamment un câble vidéo et deux câbles audio droit/gauche), munis à chacune de leurs extrémités de fiches amovibles de type adapté.

Selon un mode de réalisation intéressant, les quatre câbles de connexion sur l'écran 3 peuvent être réunis pour aboutir à une seule et même fiche (de type RCA, DC ou autre...) destinée à venir se brancher sur une connectique appropriée dudit écran.

Les différents câbles 31, 32 et 33 transitent par le compartiment de fond 16 ; ils s'étendent ensuite par des ouvertures ou des orifices appropriés aménagés dans la ceinture de parois 13, dans l'enveloppe 24, dans le bloc de mousse 23 et dans le boîtier 17, pour arriver jusqu'à l'appareillage correspondant. Sur la figure 3 en particulier, on remarque l'orifice 34 prévu dans le réceptacle 17 et le canal 35 aménagé dans le bloc de mousse 23 pour assurer l'alimentation de l'écran DVD 3.
Dans le compartiment 16 les différents câbles peuvent être masqués par un volet amovible, par exemple maintenu par un système de bandes autoagrippantes.

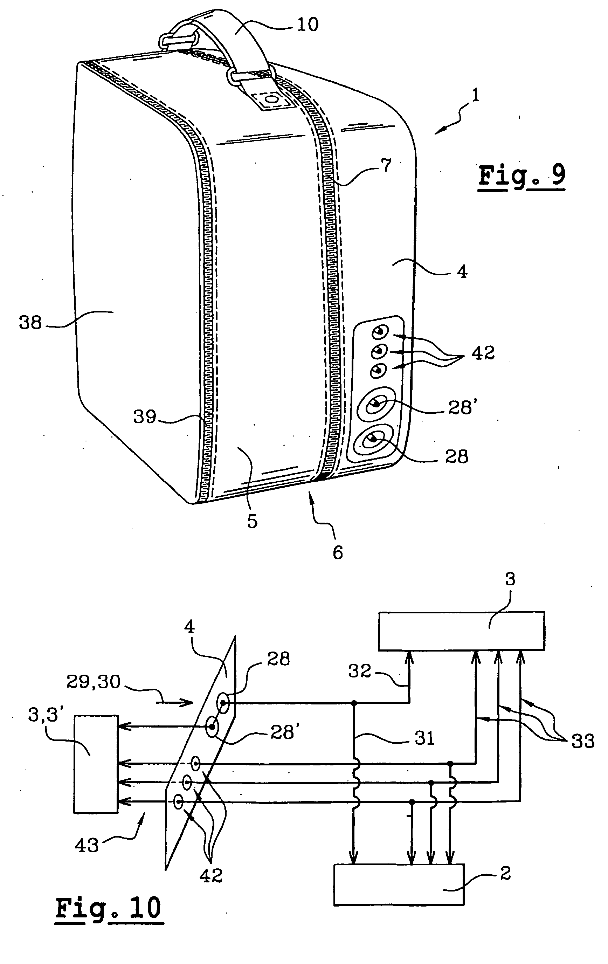

La mallette conforme à la présente invention intègre avantageusement une pluralité d'accessoires permettant ou facilitant la mise en oeuvre de l'installation vidéo, à savoir :
- un cordon d'alimentation 12 volts avec prise allume-cigares,
- un cordon d'alimentation avec prise secteur, muni d'un transformateur (12. volts/220 volts),
- un casque écouteur, et
- une housse d'appui-tête 36 assortie d'un boîtier d'écran 37, telle qu'illustrée sur la figure 8.
Cette housse d'appui-tête 36 équipée d'un réceptacle d'écran 37 similaire au réceptacle 17 décrit précédemment, permet la réception de l'écran DVD 3 et son positionnement sur la face arrière d'un appui-tête, en vue du visionnage d'un disque DVD à partir des sièges arrière d'un véhicule, après réalisation des branchements d'alimentation nécessaires.

Ces différents accessoires sont rangés dans les espaces disponibles de la mallette, à savoir autour du logement 12, entre les deux parties de rangement 4 et 5, ou encore dans une ou plusieurs pochettes complémentaires aménagées sur l'enveloppe externe.
Tel qu'illustré sur les figures 1 et 2, une pochette complémentaire 38 en forme de pochette à soufflet, peut être aménagée sur toute la surface externe de l'une des parties de rangement 4, 5. Cette pochette 38 peut être déployée par l'intermédiaire d'une fermeture à glissière 39, et elle comporte son propre système d'ouverture/fermeture, encore du genre fermeture à glissière 40.

Sur la figure 1, on a représenté en pointillés deux mousquetons 41, fixés sur la poignée 10 de la mallette ; ces mousquetons 41 permettent notamment l'accrochage de la mallette sur les tiges d'ancrage d'un appui-tête de siège d'un véhicule automobile, ou autre.

On a représenté sur les figures 9 et 10 une autre forme de réalisation possible de la mallette conforme à la présente invention.

Dans ce mode de réalisation, la mallette comporte l'intégralité des équipements et branchements du mode de réalisation décrit précédemment, et en plus son enveloppe externe est équipée d'une prise complémentaire de connexion d'alimentation 28', et également de prises de connexion audio-vidéo 42, pour permettre l'alimentation par l'extérieur soit de l'écran vidéo 3 extrait du réceptacle 17, soit d'un second écran distinct et indépendant 3'.

Comme on peut le voir sur la figure 10, les deux prises de connexion d'alimentation 28 et 28' sont reliées ensemble électriquement (et les câbles d'alimentation 31 et 32 s'étendent intérieurement à partir de l'une ou de l'autre de ces prises de connexion) ; d'autre part, chaque prise de connexion audio-vidéo 42 est reliée électriquement de manière appropriée avec l'un des câbles audio-vidéo intégrés 33.
Un système de câblage approprié 43, constitué d'un câble d'alimentation et de câbles de connexion audio-vidéo, est prévu pour assurer l'alimentation externe de l'écran vidéo 3 ou 3'.

Les deux modes de réalisation décrits de mallettes permettent la réception optimisée d'une console électronique et de l'écran associé. L'installation vidéo obtenue est très simple et très pratique à mettre en oeuvre, dans tout endroit disposant d'une source d'alimentation électrique appropriée. Cette mallette est particulièrement adaptée pour la réception d'un lecteur DVD avec son écran, mais de la même manière, elle peut être équipée de tout autre type d'ensemble vidéo, par exemple une console de jeux avec écran.

## Revendications

1. Mallette de réception pour un ensemble vidéo comprenant une console électronique (2), genre lecteur vidéo ou console de jeux, et un écran indépendant associé (3),
la mallette étant constituée de deux parties de rangement (4, 5) solidarisées entre elles par l'intermédiaire d'un système de charnière (6) et munies de moyens (7) qui permettent leur verrouillage amovible en position fermée, c'est-à-dire lorsqu'elles sont en contact l'une avec l'autre par leur bordure périphérique,
l'une (5) desdites parties de rangement (4, 5) étant adaptée pour réceptionner ledit écran (3) de manière amovible avec sa face frontale visible lorsque la mallette est en position ouverte, et
l'autre (4) desdites parties de rangement (4, 5) étant adaptée pour réceptionner ladite console électronique associée (2), également de manière amovible, ladite mallette comprenant en outre:
- au moins une prise (28) de connexion d'alimentation, aménagée sur l'une desdites parties de rangement (4, 5), à partir de laquelle s'étend un câblage interne d'alimentation (31, 32) aboutissant à deux fiches amovibles de connexion sur ledit écran (3) et sur ladite console (2), et
- un système de câblage interne (33) muni de fiches amovibles pour la liaison audio-vidéo entre ladite console (2) et ledit écran (3),
**caractérisée en ce que** la partie de rangement (4) de la console électronique (2) comporte un logement de réception (12) muni d'une face de dessus (14) amovible ou partiellement amovible, notamment pour rendre possible l'utilisation de ladite console (2) une fois intégrée dans son logement (12), et
la face de dessus (14) du logement (12) de réception de la console électronique (2) est réalisée en matériau souple et comporte au moins une partie transparente pour rendre accessibles et actionnables les organes fonctionnels de ladite console (2).

2. Mallette selon la revendication 1, **caractérisée en ce qu'** elle comporte un compartiment (16) pour les systèmes de câblage d'alimentation (31, 32) et de liaison console/écran (33), lequel compartiment (16) est aménagé dans la partie de rangement (4) de la console électronique (2), du côté du système de charnière (6), derrière le logement (12) de ladite console (2), et lequel compartiment (16) est muni d'ouvertures ou d'orifices permettant le passage desdits systèmes de câblage (31, 32, 33).

3. Mallette selon l'une quelconque des revendications 1 ou 2, **caractérisée en ce que** la partie de rangement (5) de l'écran (3) comporte un rêceptable d'encastrement (17) pour ledit écran (3), muni d'organes de verrouillage amovible (18).

4. Mallette selon la revendication 3, **caractérisée en ce que** le réceptable (17) d'encastrement amovible de l'écran (3) est fixé sur un bloc de matière protectrice (23) lequel bloc de matière (23) est lui-même fixé sur l'enveloppe de la partie de rangement correspondante (5).

5. Mallette selon l'une quelconque des revendications 1 à 4, **caractérisée en ce qu'**elle comporte des organes (8) de limitation de l'angle d'ouverture des deux parties de rangement (4, 5).

6. Mallette selon l'une quelconque des revendications 1 à 5, **caractérisée en ce qu'**elle comporte une prise complémentaire (28') de connexion d'alimentation, ainsi que des prises de connexion audio-vidéo (42), lesquelles prises (28', 42) sont reliées aux systèmes de câblage internes (31, 32, 33), pour l'alimentation externe de l'écran (3, 3').

7. Installation vidéo constituée d'une mallette (1) selon l'une quelconque des revendications 1 à 6, dans l'une des parties de rangement (5) de laquelle est positionné l'écran (3) et dans l'autre partie de rangement (5) de laquelle est insérée la console électronique (2), **caractérisée en ce que** ladite mallette (1) intégre au moins un cordon d'alimentation (29, 30) pour la liaison de la prise de connexion d'alimentation (28) notamment au secteur ou à la prise allume-cigares d'un véhicule automobile.

8. Installation vidéo selon la revendication 7, **caractérisé en ce que** la mallette (1) comporte un réceptable d'encastrement (17) amovible pour l'écran (3), lequel réceptable (17) est muni d'organes de verrouillage amovibles (18) coopérant avec des organes complémentaires de verrouillage (19) aménagés sur ledit écran (3).

9. Installation vidéo selon l'une quelconque des revendications 7 ou 8, **caractérisé en ce qu'**elle comprend une mallette selon la revendication 6 et un système de câblage (43) approprié pour l'alimentation externe d'un écran (3, 3').

## Claims

1. A case for accommodating a video assembly comprising an electronic console (2), of the video player or games console kind, and an associated independent screen (3),
said case consisting of two storage parts (4,5) secured together by way of a hinge system (6) and furnished with means (7) which allow their removable locking in the closed position, that is to say when they are in contact with one another via their peripheral edge,
one (5) of said storage parts (4, 5) being suitable for accommodating said screen (3) in a removable manner, with its front face visible when the case is in the open position, and
the other (4) of said storage parts (4, 5) being suitable for accommodating said associated electronic console (2), likewise in a removable manner,
said case furthermore comprising :
- at least one supply connection socket (28), fashioned on one of said storage parts (4, 5), from which there runs internal supply wiring (31, 32) terminating at two removable jacks for connection to said screen (3) and to said console (2), and
- an internal wiring system (33) furnished with removable jacks for the audio/video link between said console (2) and said screen (3),
**characterized in that** the storage part (4) for the electronic console (2) comprises an accommodating housing (12) furnished with a removable or partially removable top face (14), in particular so as to make the use of said console (2) possible once it has been incorporated into its housing (12), and
the top face (14) of the housing (12) for accommodating the electronic console (2) is made of a flexible material and comprises at least one transparent part so as to render the functional members of said console (2) accessible and actuatable.

2. The case as claimed in claim 1, **characterized in that** it comprises a compartment (16) for the supply wiring (31, 32) and console/screen link (33) systems, which compartment (16) is fashioned in the part (4) for storing the electronic console (2), on the hinge system (6) side, behind the housing (12) of said console (2) and which compartment (16) is furnished with openings or orifices allowing the passage of said wiring systems (31, 32, 33).

3. The case as claimed in either of claims 1 or 2, **characterized in that** the storage part (5) for the screen (3) comprises an inset receptacle (17) for said screen (3), furnished with removable locking members (18).

4. The case as claimed in claim 3, **characterized in that** the receptacle (17) for removable insetting of the screen (3) is fixed to a block of protective material (23), which block of material (23) is itself fixed to the casing of the corresponding storage part (5) .

5. The case as claimed in any one of claims 1 to 4 **characterized in that** it comprises members (8) for limiting the angle of opening of the two storage parts (4, 5).

6. The case as claimed in any one of claims 1 to 5, **characterized in that** it comprises a complementary supply connection socket (28'), as well as audio/video connection sockets (42), which sockets (18' and 42) are linked to the internal wiring systems (31, 32, 33), for the external supply of a screen (3, 3').

7. A video installation consisting of a case (1) as claimed in any one of claims 1 to 6, in one of the storage parts (5) of which is positioned the screen (3) and in the other storage part (5) of which is inserted the electronic console (2), said case (1) also incorporating at least one supply cable (29, 30) for the linking of the supply connection socket (28) in particular to the mains or to the cigar lighter socket of a motor vehicle.

8. The video installation as claimed in claim 7, **characterized in that** said case (1) comprises a removable inset receptacle (17) for the screen (3), which receptacle (17) is furnished with removable locking members (18) cooperating with complementary locking members (19) fashioned on said screen (3).

9. The video installation as claimed in either of claims 9 or 10, **characterized in that** it comprises a case as claimed in claim 6 and a wiring system (43) appropriate for the external supply of a screen (3, 3').

## Patentansprüche

1. Aufnahmekoffer für eine Videoeinheit, umfassend eine Elektronikkonsole (2) von der Art Videolesegerät oder Spielkonsole, und einen zugehörigen unabhängigen Bildschirm (3),
wobei der Koffer von zwei Teilen (4, 5) zum Verstauen gebildet ist, die miteinander durch ein Scharniersystem (6) verbunden und mit Mitteln (7) versehen sind, die ihre abnehmbare Verriegelung in geschlossener Position ermöglichen, d.h. wenn sie mit ihrem Umfangsrand miteinander in Berührung stehen,
wobei einer (5) der Teile zum Verstauen (4, 5) derart ausgeführt ist, dass er den Bildschirm (3) auf abnehmbare Weise aufnehmen kann, wobei seine Frontseite sichtbar ist, wenn sich der Koffer in offener Position befindet, und
der andere (4) der Teile zum Verstauen (4, 5) derart ausgeführt ist, dass er die zugehörige Elektronikkonsole (2) ebenfalls auf abnehmbare Weise aufnehmen kann, wobei der Koffer ferner umfasst:
- mindestens einen Versorgungsanschlussstecker (28), der auf einem der Teile zum Verstauen (4, 5) vorgesehen ist und von dem eine innere Versorgungsverkabelung (31, 32) weggeht, die an zwei abnehmbaren Steckern zum Anschließen an den Bildschirm (3) und an die Konsole (2) endet, und
- ein inneres Verkabelungssystem (33), das mit abnehmbaren Steckern für die Audio-Video-Verbindung zwischen der Konsole (2) und dem Bildschirm (3) versehen ist,
**dadurch gekennzeichnet, dass** der Teil (4) zum Verstauen der Elektronikkonsole (2) eine Aufnahmelagerung (12) umfasst, die mit einer abnehmbaren oder teilweise abnehmbaren Abdeckfläche versehen ist, insbesondere um die Verwendung der Konsole (2), wenn sie in ihre Lagerung (12) integriert ist, zu ermöglichen, und
dass die Abdeckfläche (14) der Lagerung (12) zur Aufnahme der Elektronikkonsole (2) aus einem weichen Material hergestellt ist und mindestens einen transparenten Teil umfasst, um die Funktionselemente der Konsole (2) zugänglich und betätigbar zu machen.

2. Koffer nach Anspruch 1, **dadurch gekennzeichnet, dass** er ein Abteil (16) für die Verkabelungen zur Versorgung (31, 32) und zur Verbindung Konsole/Bildschirm (33) umfasst, wobei das Abteil (16) in dem Teil (4) zum Verstauen der Elektronikkonsole (2) auf der Seite des Scharniersystems (6) hinter der Lagerung (12) der Konsole (2) vorgesehen ist, und dass das Abteil (16) mit Löchern oder Öffnungen versehen ist, die den Durchgang der Verkabelungssysteme (31, 32, 33) ermöglichen.

3. Koffer nach einem der Ansprüche 1 oder 2, **dadurch gekennzeichnet, dass** der Teil (5) zum Verstauen des Bildschirms (3) einen Einsetzbehälter (17) für den Bildschirm (3) umfasst, der mit abnehmbaren Verriegelungselementen (18) versehen ist.

4. Koffer nach Anspruch 3, **dadurch gekennzeichnet, dass** der abnehmbare Einsetzbehälter (17) für den Bildschirm (3) auf einem Block (23) aus Schutzmaterial befestigt ist, wobei der Materialblock (23) selbst auf der Hülle des entsprechenden Teils (5) zum Verstauen befestigt ist.

5. Koffer nach einem der Ansprüche 1 bis 4, **dadurch gekennzeichnet, dass** er Elemente (8) zur Begrenzung des Öffnungswinkels der beiden Teile (4, 5) zum Verstauen umfasst.

6. Koffer nach einem der Ansprüche 1 bis 5, **dadurch gekennzeichnet, dass** er einen komplementären Versorgungsanschlussstecker (28') sowie Audio-Video-Anschlussstecker (42) umfasst, wobei die Stecker (28', 42) mit den inneren Verkabelungssystemen (31, 32, 33) für die externe Versorgung des Bildschirms (3, 3') verbunden sind.

7. Videoanlage, die von einem Koffer (1) nach einem der Ansprüche 1 bis 6 gebildet ist, wobei in einem ihrer Teile (5) zum Verstauen der Bildschirm (3) positioniert und in dem anderen Teil (4) die Elektronikkonsole (2) eingesetzt ist, **dadurch gekennzeichnet, dass** der Koffer (1) mindestens ein Versorgungskabel (29, 30) für die Verbindung des Versorgungsanschlusssteckers (28) insbesondere mit dem Netz oder dem Zigarettenanzünder eines Kraftfahrzeugs umfasst.

8. Videoanlage nach Anspruch 7, **dadurch gekennzeichnet, dass** der Koffer (1) einen abnehmbaren Einsetzbehälter (17) für den Bildschirm (3) umfasst, wobei der Behälter (17) mit abnehmbaren Verriegelungselementen (18) versehen ist, die mit komplementären Verriegelungselementen (19) zusammenwirken, die auf dem Bildschirm (3) vorgesehen sind.

9. Videoanlage nach einem der Ansprüche 7 oder 8, **dadurch gekennzeichnet, dass** sie einen Koffer nach Anspruch 6 und ein geeignetes Verkabelungssystem (43) für die externe Versorgung eines Bildschirms (3, 3') umfasst.
